# FASCICULE DE BREVET EUROPEEN

(11) **EP 3 763 990 B1**
(45) Date de publication et mention de la délivrance du brevet: **17.04.2024**
(21) Numéro de dépôt: 20181315.1
(22) Date de dépôt: 22.06.2020
(51) Int. Cl.: F17C 5/06

(54) **DISPOSITIF ET PROCÉDÉ DE REMPLISSAGE DE RÉSERVOIRS**
VORRICHTUNG UND VERFAHREN ZUM FÜLLEN VON TANKS
DEVICE AND METHOD FOR FILLING TANKS

(30) Priorité: 03.07.2019 FR 1907365
(43) Date de publication de la demande: 13.01.2021
(73) Titulaire: L'Air Liquide, société anonyme pour l'Étude et l'Exploitation des procédés Georges Claude, 75007 Paris (FR)
(72) Inventeur: FAIRY, Vincent, 75007 PARIS (FR); DEBESOMBES, Louis, 75007 PARIS (FR); THIEU, Anh Thao, 78350 LES LOGES-EN-JOSAS (FR)
(74) Mandataire: Air Liquide

(56) Documents cités:
- WO-A1-2016/172637
- US-A1- 2017 146 194

## Description

L'invention concerne un dispositif et un procédé de remplissage de réservoirs.

L'invention concerne plus particulièrement un dispositif de remplissage de réservoirs de gaz sous pression, en particulier de réservoirs d'hydrogène de véhicules, comprenant un circuit de transfert de fluide muni d'une extrémité amont destinée à être raccordée à une source de gaz et au moins deux extrémité aval parallèles destinées à être raccordées à des réservoirs distincts à remplir, le circuit de transfert comprenant un organe de régulation de la température du gaz transféré de la source vers les extrémités aval, l'organe de régulation de la température du gaz étant disposé dans le circuit de transfert en amont des moins deux extrémités aval, c'est à dire que l'organe de régulation de la température du gaz est commun aux au moins deux extrémités aval.

Pour le remplissage rapide de réservoirs d'hydrogène gazeux sous pression il est généralement nécessaire de pré-refroidir le gaz pour éviter une surchauffe du réservoir rempli.

Les dispositifs ou stations-services existantes sont généralement de petite taille et possèdent une ou deux positions de remplissage équipées chacune de son propre dispositif de refroidissement.

L'augmentation de la capacité des stations et du nombre de positions de remplissage multiplie donc les dispositifs de refroidissement.

De plus, ce pré-refroidissement de l'hydrogène avant le remplissage est très exigent. Le flux de gaz à refroidir peut avoir un à débit très variable (0.5 - 1.8 kg/min par exemple), avec des températures d'entrée très variables (température ambiante, -20°C à 40°C). En outre, plus la détente de ce gaz à haute pression fourni par la source de gaz est important, plus le réchauffement par effet Joule-Thomson est important.

Dans des installations connues, l'hydrogène est d'abord acheminé vers les distributeurs. Il est ensuite détendu à la pression requise au niveau du distributeur. Le refroidissement est réalisé ensuite via un échangeur dans le distributeur pour pouvoir neutraliser les réchauffements par effet Joule-Thomson. Chaque distributeur doit donc être équipé d'un échangeur et d'un raccordement au système de refroidissement. Pour les stations à grande capacité, ce système de refroidissement augmente le coût et la complexité de l'installation.

Le document EP0933583A2 décrit une installation de remplissage de réservoir comprenant un système de refroidissement amont commun pour le remplissage simultané de plusieurs bouteilles. Cette architecture ne permet pas d'adapter le remplissage à différents réservoirs ayant par exemple des caractéristiques structurelles différentes et/ou des pressions de départ différentes.

Un autre dispositif de remplissage est connu de US2017/146194A1.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que les au moins deux extrémités aval du circuit comprennent chacune un organe respectif de contrôle du débit et/ou de la pression du gaz transféré configuré pour contrôler de façon indépendante le débit et/ou la pression dans chacune des extrémités aval.

Par ailleurs, des modes de réalisation de l'invention peuvent comporter l'une ou plusieurs des caractéristiques suivantes :
- l'organe de contrôle du débit et/ou de la pression de chaque extrémité aval comprend une vanne pilotée de contrôle de la pression et/ou du débit, le dispositif de remplissage comprenant un contrôleur électronique configuré pour piloter lesdites vannes,
- le contrôleur est configuré pour piloter lesdites vannes selon un ou des algorithmes de remplissage rapide établissant des vitesses de montée en pression respectives identiques ou distinctes dans lesdits réservoirs,

- le dispositif comporte, dans chaque extrémité aval, un capteur température mesurant la température du gaz, lesdits capteurs étant reliés au contrôleur,
- les capteurs de température sont disposés en aval des organes respectifs de contrôle du débit et/ou de la pression,
- le contrôleur est configuré pour piloter l'organe de contrôle du débit et/ou de la pression de chaque extrémité aval en fonction de la température mesurée par le capteur de température de ladite extrémité aval,
- le contrôleur est configuré pour augmenter la vitesse de remplissage d'un réservoir raccordé à une extrémité aval lorsque la température mesurée par le capteur de mesure de la température de ladite extrémité diminue et pour diminuer la vitesse de remplissage d'un réservoir raccordé à une extrémité aval lorsque la température mesurée par le capteur de température de ladite extrémité augmente,
- le dispositif comporte débitmètre de mesure du débit de gaz dans chacune des extrémités aval, lesdits débitmètres étant reliés au contrôleur, le contrôleur étant configuré pour piloter l'organe de contrôle du débit et/ou de la pression de chaque extrémité en fonction du débit mesuré par ledit débitmètre de ladite extrémité aval,
- le contrôleur est configuré pour calculer une température moyenne de la quantité de gaz transférée dans chaque extrémité aval à partir des mesures du capteur de température et du débitmètre, le contrôleur étant configuré pour piloter l'organe de contrôle du débit et/ou de la pression de chaque extrémité en fonction de cette température moyenne de la quantité de gaz transférée, notamment pour augmenter la vitesse de remplissage d'un réservoir raccordé à une extrémité aval lorsque la température moyenne de la quantité de gaz transféré diminue et pour augmenter la vitesse de remplissage d'un réservoir raccordé à une extrémité aval lorsque cette température moyenne de la quantité de gaz transférée augmente,
- le contrôleur est configuré pour piloter l'organe de contrôle du débit et/ou de la pression en rétroaction,
- le circuit de transfert comprend, entre l'extrémité amont et les extrémités aval, une portion comprenant au moins deux conduites distinctes parallèles, lesdites conduites parallèles comprenant chacune un organe respectif de régulation de la température du gaz, les conduites parallèles comprenant chacune une première extrémité destinée à être raccordée à la source et une seconde extrémité raccordée à chacune des extrémités aval du circuit via un ensemble de vannes respectives,
- le dispositif comprend une source comportant un ou plusieurs stockages de gaz sous pression raccordés en série et/ou en parallèle à l'extrémité amont du circuit,
- la source comprend au moins deux ensembles de fluide à des températures différentes, l'organe de régulation de la température du gaz comprenant un mélangeur configuré pour assurer un mélange de fluide provenant des au moins deux ensembles pour atteindre une température déterminée,
- le dispositif comprend une source comportant au moins un stockage de gaz liquéfié, l'organe de régulation de la température du gaz comprend une portion du circuit de transfert qui est dédoublée munie de deux branches parallèles dont l'une comprend un échangeur de réchauffage du fluide, le dispositif de régulation de température comprenant en outre un ensemble de vanne(s) configuré pour commander la répartition du fluide issu du stockage de gaz liquéfié dans les deux branches parallèles afin de réguler la température du mélange de fluide en aval de l'organe de régulation de la température,
- l'organe de régulation de la température du gaz comprend un échangeur de chaleur assurant un échange de chaleur entre le gaz du circuit et une source froide tel qu'un fluide refroidissement,
- l'organe de régulation de la température est piloté pour refroidir le gaz sous pression à une température déterminée fonction de la vitesse de remplissage imposée par le ou les organes de contrôle du débit et/ou de la pression du gaz,
- la source comportant un ou plusieurs stockages de gaz sous pression raccordés en série et/ou en parallèle à l'extrémité amont du circuit, l'organe de régulation de la température est piloté pour refroidir le gaz sous pression à une température déterminée fonction du différentiel de pression entre d'une part la pression haute du gaz fourni par un stockage du gaz sous pression lors d'un transfert de gaz et, d'autre part, la pression basse du réservoir à remplir,
- l'organe de régulation de la température est piloté pour refroidir le gaz sous pression à une température déterminée assurant, en aval du ou des organes de contrôle du débit et/ou de la pression une température de gaz comprise entre -25°C et - 40°C, notamment entre -17,5°C et -40°C.

L'invention concerne également procédé de remplissage de plusieurs réservoirs de gaz sous pression, en particulier des réservoirs d'hydrogène de véhicules, via un dispositif comprenant un circuit de transfert de fluide muni d'une extrémité amont raccordée à au moins une source de gaz et au moins deux extrémités aval parallèles destinées être raccordées à des réservoirs distincts, le procédé comprenant une étape de refroidissement du gaz transféré de la source vers les extrémités aval dans un même organe commun de régulation de la température, le procédé comprenant une étape de transfert de gaz dans des réservoirs distincts raccordés à des extrémités aval respectives, le débit et/ou la pression du gaz de gaz transféré dans les réservoirs étant contrôlés de façon indépendante via des organes de régulation respectifs distincts situés dans les extrémités aval.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant un exemple de structure et de fonctionnement d'un dispositif de remplissage selon l'invention,
[Fig. 2] représente une vue schématique et partielle illustrant un autre exemple de structure et de fonctionnement d'un dispositif de remplissage selon l'invention,
[Fig. 3] représente une vue schématique et partielle illustrant un autre exemple de structure et de fonctionnement d'un dispositif de remplissage selon l'invention,
[Fig. 4] représente les courbes caractéristiques d'un exemple de remplissage selon l'art antérieur,
[Fig. 5] représente les courbes caractéristiques d'un exemple de remplissage selon l'invention.

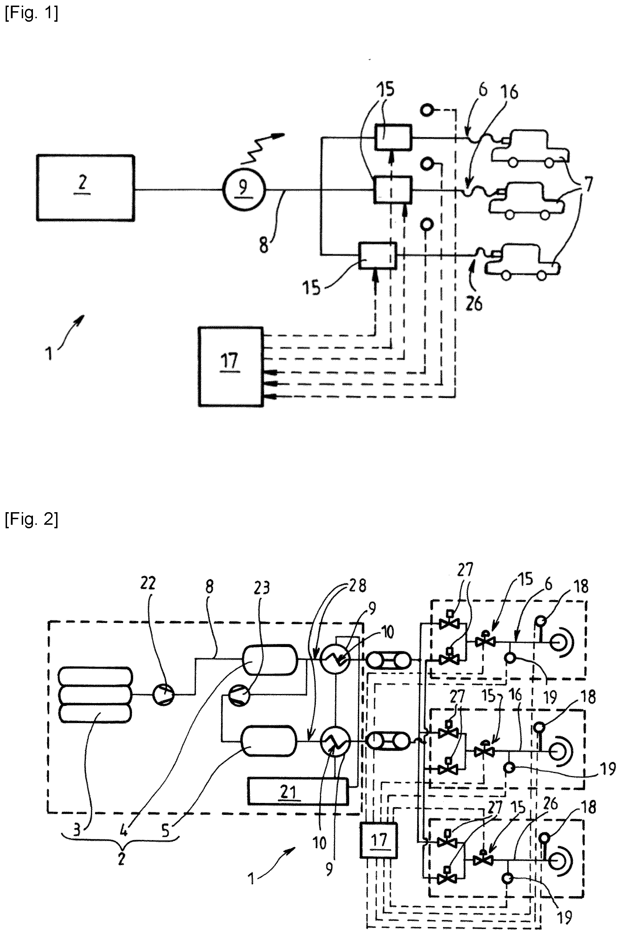

Le dispositif 1 de remplissage de réservoirs de gaz sous pression représenté schématiquement à la [Fig. 1] peut être notamment une station de remplissage de réservoirs d'hydrogène de véhicules 7.

Ce dispositif comprend classiquement circuit 8 de transfert de fluide muni d'une extrémité amont raccordée à au moins une source 2 de gaz sous pression (de préférence au moins deux sources) et au moins deux extrémités aval 6, 16, 26 parallèles destinées à être raccordées à des réservoirs 7 distincts à remplir (flexibles de distribution munis de pistolet ou équivalent par exemple).

Le circuit 8 de transfert comprend un organe 9 de régulation de la température du gaz transféré de la source 2 vers la ou les extrémités aval. Cet organe 9 de régulation de la température est en particulier prévu pour amener le gaz transféré à une température déterminée comme détaillé ci-après. En particulier, l'organe 9 de régulation peut être configuré pour refroidir le gaz de la source 2 (lorsque le gaz de la source est à une température plus élevée que la température déterminée) et/ou pour réchauffer le gaz (lorsque le gaz de la source est à une température inférieure à la température déterminée).

L'organe 9 de régulation de la température du gaz est disposé dans le circuit 8 de transfert en amont des moins deux extrémités aval 6, 16, 26. C'est à dire que l'organe 9 de régulation de la température du gaz est commun à plusieurs des extrémités aval 6, 16, 26. Ainsi, le gaz transféré dans chacune des extrémités aval vers les réservoirs 7 remplis (simultanément ou non) a été régulé en température par un même organe 9 commun.

De plus, les extrémité aval 6, 16, 26 du circuit 8 de transfert comprennent chacune un organe 15 respectif de contrôle du débit et/ou de la pression du gaz transféré configuré pour contrôler de façon indépendante le débit et/ou la pression dans chacune des extrémités aval 6, 16, 26.

Ceci permet de mutualiser le refroidissement pour plusieurs distributeurs tout en permettant de réaliser des remplissages optimisés à des situations distinctes en assurant une détente ou régulation de débit du gaz à haute pression refroidi en amont.

L'organe 15 de contrôle du débit et/ou de la pression de chaque extrémité aval 6, 16, 26 peut comprendre par exemple une vanne 15 pilotée de contrôle de la pression ou tout autre organe approprié permettant de réguler un débit et/ou une pression en aval. Le dispositif 1 de remplissage comprend de préférence un contrôleur 17 électronique configuré pour piloter lesdites vannes 15 ou équivalent. Le contrôleur 17 peut comprendre un ordinateur ou un ensemble de microprocesseur(s) ou tout autre appareil électronique approprié de stockage et de traitement de données permettant de piloter au moins les vannes 15.

Le contrôleur 17 peut notamment être configuré (programmé) pour piloter lesdites vannes 15 selon un ou des algorithmes de remplissage rapide établissant des vitesses de montée en pression respectives identiques ou distinctes dans lesdits réservoirs remplis.

De préférence, un capteur 18 de température est prévu dans chaque extrémité 6, 16, 26 aval pour mesurer la température du gaz, lesdits capteurs 18 étant reliés au contrôleur 17. De préférence, les capteurs 18 de température sont disposés en aval des organes 15 respectifs de contrôle du débit et/ou de la pression, pour mesure la température du gaz après détente/régulation de débit, juste avant transfert dans un réservoir 7.

En particulier, le contrôleur 17 peut être avantageusement configuré pour piloter l'organe 15 de contrôle du débit et/ou de la pression de chaque extrémité aval 6, 16, 26 en fonction de la température mesurée par le capteur 18 de température de ladite extrémité aval 6, 16, 26.

Par exemple, le contrôleur 17 peut être configuré pour augmenter la vitesse de remplissage d'un réservoir 7 raccordé à une extrémité aval lorsque la température mesurée par le capteur 18 de mesure de la température de ladite extrémité. 6, 16, 26 diminue et pour diminuer la vitesse de remplissage d'un réservoir raccordé à une extrémité aval lorsque la température mesurée par le capteur 18 de température de ladite extrémité 6, 16, 26 augmente.

De préférence, le dispositif comporte un débitmètre 19 de mesure du débit de gaz dans chacune des extrémités aval 6, 16, 26 (cf. [Fig. 2]), lesdits débitmètres 19 étant reliés au contrôleur 17 et le contrôleur 17 est configuré pour piloter l'organe 15 de contrôle du débit et/ou de la pression de chaque extrémité en fonction du débit mesuré par ledit débitmètre 19 de ladite extrémité aval 6, 16, 26. Par exemple, le contrôleur 17 est configuré pour calculer une température moyenne de la quantité de gaz transférée dans chaque réservoir 7 relié à une extrémité aval 6, 16, 26 à partir des mesures du capteur 18 de température et du débitmètre (19). Le contrôleur 17 peut être configuré pour piloter l'organe 15 de contrôle du débit et/ou de la pression de chaque extrémité en fonction de cette température moyenne de la quantité de gaz transférée, notamment pour augmenter la vitesse de remplissage d'un réservoir raccordé à une extrémité aval lorsque la température moyenne de la quantité de gaz transféré diminue et pour diminuer la vitesse de remplissage d'un réservoir raccordé à une extrémité aval lorsque cette température moyenne de la quantité de gaz transférée augmente. De préférence le contrôleur 17 ne régule pas l'organe 9 de régulation de la température (l'organe 9 est de préférence indépendant).

Le débitmètre 19 n'est pas limité à un organe qui mesure directement le débit de gaz dans le circuit. En variante ou en combinaison, ce débit peut être calculé par des mesures connues à partir de mesures de pression et de température dans le circuit et/ou dans le réservoir à remplir, notamment en aval de chaque vanne 15 de régulation.

Le contrôleur 17 peut en particulier être configuré pour piloter l'organe 15 de contrôle du débit et/ou de la pression en rétroaction (« feedback control »).

Ainsi, le dispositif 1 refroidit donc le gaz en amont dans le circuit 8 au niveau de la station ce qui permet de mutualiser la partie refroidissement entre les différents distributeurs en aval 6, 16, 26. En contrôlant le débit de remplissage de façon indépendante au niveau de chacune des extrémités 6, 16, 26 en aval (de préférence en temps réel et en rétroaction en fonction de la température du gaz au niveau du distributeur), le dispositif permet de compenser de façon indépendante les fluctuations de température par effet Joule-Thomson avec les variations de pression propres à chaque distributeur. Cet agencement permet d'éviter une surchauffe des réservoirs 7 à remplir.

Ainsi, le dispositif 1 assure un refroidissement du gaz à haute pression (c'est-à-dire avant détente dans chaque distributeur 6, 16, 26). Comme explicité ci-dessus, cette température régulée peut être choisie et calculée en fonction de l'un au moins parmi :
- la vitesse de remplissage voulue
- de l'effet Joule-Thomson prévu lors de la détente (en fonction des niveaux de pression des réservoirs 7 à remplir),
- les pertes thermiques connues le long des lignes.

Le nombre de niveaux de pression (cascade) disponible à la station un une influence sur le niveau de détente. Plus il y a de niveaux de pression disponibles, moins sera nécessaire la détente en aval. Par exemple, si deux niveaux de pression sont disponibles (450 bar et 900 bar par exemple) avec une différence de température 0-20°C, la température régulée sera régulée entre -45°C à -40°C. Si en revanche on dispose de trois niveaux de pression différents (par exemple 300 bar, 600 bar, 900 bar), la différence de température peut être comprise entre 0-14°C et la température peut être régulée entre -35 à -40°C.

Par exemple, pour une station 1 où l'hydrogène est stocké dans deux stockages tampon à des niveaux de pression respectifs de 450 bar et 900 bar dans une source 2, l'effet Joule-Thomson entraine des échauffements de l'ordre de 0 à 20°C pour l'hydrogène. Pour avoir en moyenne une température de gaz de - 33°C à la sortie aval des distributeurs 6, 16, 26, l'hydrogène doit être refroidi en amont à une température typiquement comprise entre -45°C et -40°C avant sa détente.

Cette température peut être différente pour les différents niveaux de pression à la station.

Dans l'exemple de la [Fig. 2] la source de gaz comprend un stockage 3 gazeux (par exemple plusieurs récipients gazeux en parallèles contenant du gaz à une pression, notamment à une pression comprise entre 50 et 500bar). En aval dans le circuit 8 de transfert un premier compresseur 22 permet de remplir un premier stockage tampon 4 (par exemple à une pression comprise entre 200 et 700bar**)**. En aval du premier stockage 4 tampon, un second compresseur 23 peut être prévu pour remplir un second stockage tampon 5 à plus haute pression (par exemple à une pression comprise entre 500 et 900bar**)**.

L'hydrogène provenant de la source 2 peut ainsi être comprimé par un ou des compresseurs 22, 23 en vue d'être stocké dans des stockages tampon à des pressions différentes en vue d'un transfert de gaz dans les réservoirs 7 par équilibrages de pression successifs (« en cascade »). Ainsi, les stockages 4, 5 tampon peuvent être reliés en parallèle (et en série) à chacune des extrémités aval 6, 16, 26 du circuit 8 de transfert. Un échangeur 10 de refroidissement est prévu pour refroidir le gaz sortant de chaque stockage 4, 5 tampon avant d'alimenter les extrémités aval 6, 16, 26.

Comme illustré, l'échangeur 10 de chaleur peut être un échangeur assurant un échange de chaleur entre le gaz du circuit 8 et une source 21 froide tel qu'un fluide refroidissement circulant en boucle ou non. L'organe 9 de régulation de la température du gaz peut ainsi comprendre ou peut être constitué de cet échangeur 10 de chaleur.

Comme illustré, le circuit 8 de transfert comprend de préférence, entre l'extrémité amont et les extrémités aval 6, 16, 26, une portion comprenant au moins deux conduites 28 distinctes parallèles. Lesdites conduites parallèles 28 comprennent chacune un organe 9 respectif de régulation de la température du gaz (échangeur 10 de refroidissement dans cet exemple). Ces deux conduites parallèles sont reliées en amont respectivement à la sortie des deux stockages tampon 4, 5. Ces deux conduites 28 parallèles sont reliées à aval, via un ensemble de vannes 27, à toutes les extrémités 6, 16, 26 aval du circuit 8 de distribution.

Ainsi, les extrémités aval 6, 16, 26 sont reliée en parallèle à chacune des deux conduites parallèles 28 du circuit. De cette façon, un réservoir 7 relié à une extrémité aval 6, 16, 26 peut être alimenté en gaz à partir de l'un ou l'autre (ou les) stockage tampons 4, 5 avec, à chaque fois, un refroidissement 9, 10 amont commun (deux stockages tampon dans cet exemple mais qui pourrait être au nombre de trois ou plus).

Ces vannes 27 permettent de choisir l'hydrogène refroidi provenant de la source 2 ayant le niveau de pression le plus approprié pour remplir le réservoir 7.

Par exemple, de l'hydrogène peut être soutiré de la ligne dite à moyenne pression (conduite 28 supérieure à la [Fig. 1]) si la pression demandée est inférieure cette pression dans le stockage tampon 4 moyenne pression correspondant. Cet hydrogène peut ensuite être détendu en aval dans la vanne 15 jusqu'à la pression requise. L'hydrogène détendu, sous l'effet Joule-Thomson, aura une température comprise de préférence entre -40°C et -25°C.

Comme schématisé par des lignes discontinues, tous les organes du circuit 8 de transfert jusqu'au(x) organes 9, 10 de régulation de la température peuvent faire partie d'une entité amont ou « station amont ».

De même, tous les organes en aval du ou des organes 9 de régulation de la température peuvent faire partie d'une entité aval de distribution (accessible aux utilisateurs). Entre ces deux entités la ou les lignes de transfert de gaz refroidi peuvent être isolées thermiquement et/ou refroidies.

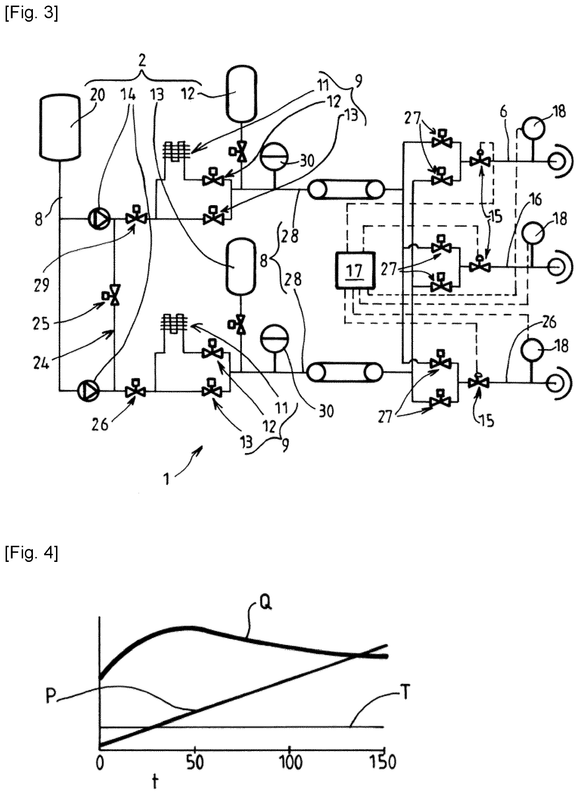

Dans l'exemple de la [Fig. 3], la source 2 comprend un stockage 20 de gaz liquéfié qui alimente, via des vannes ou pompes 14 respectives, deux conduites parallèles 28 comprenant chacune un organe 9 respectif de régulation de la température du gaz. Comme précédemment, ces deux conduites 28 parallèles sont reliées à aval, via un ensemble de vannes 27, respectivement avec toutes les extrémités 6, 16, 26 aval du circuit 8 de distribution.

De plus, une conduite transversale 24 (munie d'une vanne 29 facultative) peut être prévue pour transférer du fluide d'une conduite 28 à l'autre en amont des organes 9 de régulation de la température du gaz.

En aval de la pompe 14 et en amont de l'organe 9 respectif de régulation de la température, chaque conduite 28 peut comporter une vanne 29 facultative. C'est-à-dire que la conduit e24 ainsi que les vannes 25 et 29 peuvent être omises.

L'organe 9 de régulation de la température du gaz peut comprendre une portion du circuit 8 de transfert qui est dédoublée munie de deux branches parallèles dont l'une comprend un échangeur 11 de réchauffage du fluide. L'organe 9 de régulation de température comprend en outre un ensemble de vanne(s) 12, 13 configuré pour commander la répartition du fluide issu du stockage 20 de gaz liquéfié dans les deux branches parallèles afin de réguler la température du fluide à une température déterminée. C'est-à-dire que le fluide sous pression est réparti entre l'échangeur 11 de réchauffage et une portion de by-pass de cet échangeur 11 pour réguler sa température en aval. Ce gaz à température désirée peut alimenter un stockage 12 tampon respectif et/ou la conduite aval vers les extrémités aval 6, 16, 26 de distribution.

Ainsi, de l'hydrogène liquide peut être soutiré (pompé) du stockage 2 liquide, puis stocké dans les stockage tampon 12, 13 à des pressions différentes (à température ambiante ou maintenu en froid à une température contrôlée).

De l'hydrogène à température déterminée peut être obtenu ainsi de façon connue en soit en mélangeant l'hydrogène froid venant directement de la pompe 14 et l'hydrogène plus chaud venant des stockage tampon 12, 13.

Plus généralement, la régulation de température peut être obtenue en réalisant un mélange adéquat entre de l'hydrogène relativement chaud et de l'hydrogène relativement froid. L'hydrogène relativement chaud peut provenir par exemple de stockage(s) tampon de gaz sous pression et/ou d'une source froide via un réchauffement (échangeur de chaleur par exemple). L'hydrogène plus froide peut provenir par exemple d'une source de liquide cryogénique et/ou de fluide plus chaud mais refroidi par un système de refroidissement (refroidisseur via un fluide froid tel que de l'azote liquide par exemple). Toute autre type de régulation de la température appropriée peut être envisagée.

Comme illustré, un capteur 30 de température peut être placé dans chaque conduite 28 en aval du stockage tampon 12, 13 et de l'organe 9 de régulation de température.

Dans les exemples ci-dessus, deux stockages tampon sont prévus. Bien entendu, en variante un ou plus de deux stockages tampon peuvent être prévus (trois notamment). Ces stockages tampon peuvent être remplis avec du gaz à des niveaux de pression différents. Lors d'un remplissage de réservoir(s) 7, de l'hydrogène est soutiré préférentiellement du ou des stockages tampon buffers ayant le niveau de pression le plus proche supérieur du réservoir 7 à remplir. Lorsqu'il y a équilibrage de pression entre ce premier stockage tampon et le réservoir 7 à remplir (différentiel de pression et/ou débit en dessous d'un seuil), le dispositif 1 utilise ensuite un autre stockage tampon (changement de banc de pression) et ainsi de suite.

Ceci permet de minimiser le réchauffement par effet Joule-Thomson. Le gaz à haute pression est refroidi au niveau de la station en amont, puis amené au distributeur (extrémités aval 6, 16, 26) où il est détendu dans le distributeur (vanne (s) 15) avant d'être délivré aux réservoir(s) récepteur(s).

A noter que ce transfert de gaz en cascade peut être compléter et/ou suppléé et/ou remplacé par au moins une autre source de pression tel qu'un compresseur par exemple.

L'architecture permet donc une combinaison d'un remplissage en cascade, d'un refroidissement mutualisé amont avant détente/régulation, tout en permettant un contrôle de remplissage dans chaque extrémité aval. De préférence, le contrôle de pression dans chaque extrémité aval 6, 16, 26 est assuré via un algorithme de remplissage rapide. Par exemple, le contrôleur pilote les vannes 15 de détente selon la méthode de remplissage dite « méthode MC » telle que décrite notamment dans le document US2011259469A. Le calcul de la vitesse de remplissage peut donc être basé sur cette température moyenne selon des équations théoriques ou empiriques, notamment celles décrites par la méthode MC ou le protocole de remplissage du standard SAE J2601.

Comme précédemment, le contrôle de la vitesse de remplissage dans le réservoir 7 est de préférence piloté via une rampe de pression au niveau de la vanne 15 correspondante (vanne de type PCV « Pressure Control Valve » par exemple). Ce contrôle de la vitesse de remplissage en aval peut être réalisé dynamiquement en fonction de la mesure 18 de température réelle du gaz au niveau du distributeur aval. A tout moment, la température au niveau du distributeur 6, 16, 26 peut être mesurée. Une température moyenne pondérée sur la masse délivrée peut être calculée. Ceci permet d'estimer la quantité d'énergie introduite dans le réservoir 7 rempli et l'échauffement de ce réservoir 7. La vitesse de remplissage (rampe de pression) peut être contrôlée en rétroaction (« feedback control ») en fonction de cette température moyennée au distributeur. Le remplissage est accéléré quand cette température moyenne est basse et vice-versa.

En variante ou en combinaison, le contrôle de la vitesse de remplissage en aval peut être réalisé dynamiquement en fonction de la température du réservoir et/ou de la température du gaz dans le réservoir. Cette température peut être communiquée par le réservoir 7 au contrôleur et/ou peut être estimée par le contrôleur en fonction d'autres paramètres comme décrit par exemple dans les résultats publiés par le projet Européen « HyTransfer » (cf. notamment le document « Pre-Normative Research for Thermodynamic Optimization of Fast Hydrogen Transfer » du projet Hytransfer (https://www.fch.europa.eu/project/pre-normative-research-thermodynamic-optimization-fast-hydrogen-transfer) .

Le dispositif et procédé décrit ci-dessus permettent de simplifier la structure ou le fonctionnement de stations à grande capacité en minimisant le nombre de connexion entre la partie amont de la station-et les distributeurs en aval.

Le dispositif 1 permet également de limiter le nombre, le coût et la complexité des composants de refroidissement, particulièrement pour les stations ayant une source de gaz liquéfié où un mélange chaud-froid est difficile à réaliser.

L'architecture permet augmenter la modularité de la station. En effet, il est possible d'ajouter aisément un ou plusieurs distributeurs sans changer d'architecture globale en amont du circuit.

L'encombrement des distributeurs en aval est également réduit.

Comparé à un remplissage classique, le remplissage proposé peut être plus irrégulier, mais parviendra à un même temps de remplissage sans contrôle exacte de la température du fluide détendu en aval.

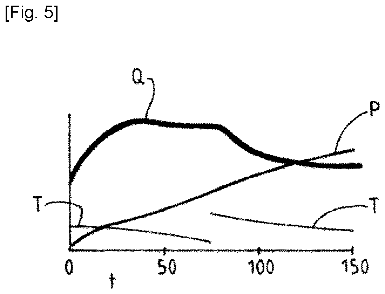

Les [Fig. 4] et [Fig. 5] représentent les courbes caractéristiques des paramètres mesurés au niveau de l'extrémité aval: pression P (reflétant la pression dans le réservoir 7), débit Q de gaz et température T en fonction du temps d'un exemple de remplissage dans un réservoir selon respectivement l'art antérieur et selon l'invention.

Comme visible à la [Fig. 4], la montée en pression P est linéaire, la température T du gaz dans le distributeur est sensiblement constante tandis que le débit Q augmente avant de décroître.

Dans l'exemple selon l'invention de la [Fig. 5], la montée en pression P est moins linéaire, la variation de débit Q plus irrégulière et la température T du gaz dans l'extrémité aval subit une discontinuité au moment du changement de stockage tampon lors de la cascade.

Ainsi, selon l'invention la température du gaz de remplissage peut être relativement plus basse avant le changement de banc de pression (par exemple vers 200-400 bar) . Ceci entraîne une grande vitesse de remplissage à ces pressions où le débit de remplissage est le plus important. Ce débit de remplissage important compense les phases après le changement de banc de pression où la vitesse chute à cause de la grande température au distributeur.

Ainsi, avantageusement la station peut intégrer une source de gaz liquide (hydrogène). Il peut être intéressant d'y produire le froid par un mélange de gaz cryogénique avec du gaz plus chaud (température ambiante par exemple) au travers d'un organe de régulation de température.

Dans une première possibilité d'intégration, les mêmes vannes réalisent à la fois la régulation de température et la régulation de rampe de pression (par exemple quantité de gaz par unité de temps) du gaz transféré au réservoir à remplir.

Dans ce cas, il peut être nécessaire de prévoir jeu de vannes et une tuyauterie d'interconnexion pour chaque extrémité destinée à être raccordée à un réservoir.

Selon une particularité possible (en combinaison ou indépendamment de ce qui précède), au moins deux réservoirs tampon destinés à des lignes distinctes peuvent être mutualisés pour une même ligne de remplissage. Si deux (ou plus) réservoirs tampon se retrouvent à la même pression (par exemple un réservoir tampon a une pression qui descend à 180 bar et un autre est à cette pression, ces réservoirs tampon peuvent être utilisés en parallèle. Leurs vannes respectives s'ouvrent simultanément et les réservoirs restent interconnectés. Cela permet de d'éviter un écart de pression trop important et de limiter le nombre d'ouvertures et fermetures de vannes dans la vie des composants. Ceci permet d'allonger la durée de vie des composants. Le contrôle électronique est également simplifié. La performance de la station est améliorée.

## Revendications

1. Dispositif de remplissage de réservoirs de gaz sous pression, en particulier de réservoirs d'hydrogène de véhicules, comprenant un circuit (8) de transfert de fluide muni d'une extrémité amont destinée à être raccordée à une source (2) de gaz et au moins deux extrémité aval (6, 16, 26) parallèles destinées à être raccordées à des réservoirs (7) distincts à remplir, le circuit (8) de transfert comprenant un organe (9) de régulation de la température du gaz transféré de la source (2) vers les extrémités aval, l'organe (9) de régulation de la température du gaz étant disposé dans le circuit (8) de transfert en amont des moins deux extrémités aval (6, 16, 26), c'est à dire que l'organe (9) de régulation de la température du gaz est commun aux au moins deux extrémités aval (6, 16, 26), **caractérisé en ce que** les au moins deux extrémités aval (6, 16, 26) du circuit comprennent chacune un organe (15) respectif de contrôle du débit et/ou de la pression du gaz transféré configuré pour contrôler de façon indépendante le débit et/ou la pression dans chacune des extrémités aval (6, 16, 26) l'organe de contrôle du débit et/ou de la pression de chaque extrémité aval (6, 16, 26) comprenant une vanne (15) pilotée de contrôle de la pression et/ou du débit, le dispositif (1) de remplissage comprenant un contrôleur (17) électronique configuré pour piloter lesdites vannes (15), ledit contrôleur (17) étant configuré pour piloter lesdites vannes (15) selon un ou des algorithmes de remplissage rapide établissant des vitesses de montée en pression respectives identiques ou distinctes dans lesdits réservoirs (7).

2. Dispositif selon la revendication 1, **caractérisé en ce qu'**il comporte, dans chaque extrémité (6, 16, 26) aval, un capteur (18) température mesurant la température du gaz, lesdits capteurs (18) étant reliés au contrôleur (17).

3. Dispositif selon l'une quelconque des revendications 1 à 2, **caractérisé en ce que** les capteurs (18) de température sont disposés en aval des organes (15) respectifs de contrôle du débit et/ou de la pression.

4. Dispositif selon l'une quelconque des revendications 2 ou 3, **caractérisé en ce que** le contrôleur (17) est configuré pour piloter l'organe (15) de contrôle du débit et/ou de la pression de chaque extrémité aval (6, 16, 26) en fonction de la température mesurée par le capteur (18) de température de ladite extrémité aval (6, 16, 26).

5. Dispositif selon la revendication 4, **caractérisé en ce que** le contrôleur (17) est configuré pour augmenter la vitesse de remplissage d'un réservoir raccordé à une extrémité aval lorsque la température mesurée par le capteur (18) de mesure de la température de ladite extrémité (6, 16, 26) diminue et pour diminuer la vitesse de remplissage d'un réservoir raccordé à une extrémité aval lorsque la température mesurée par le capteur (18) de température de ladite extrémité (6, 16, 26) augmente.

6. Dispositif selon l'une quelconque des revendication 3 à 5, **caractérisé en ce qu'**il comporte débitmètre (19) de mesure du débit de gaz dans chacune des extrémités aval (6, 16, 26), lesdits débitmètres (19) étant reliés au contrôleur (17), le contrôleur (17) étant configuré pour piloter l'organe (15) de contrôle du débit et/ou de la pression de chaque extrémité en fonction du débit mesuré par ledit débitmètre (19) de ladite extrémité aval (6, 16, 26).

7. Dispositif selon la revendication 6, **caractérisé en ce que** le contrôleur (17) est configuré pour calculer une température moyenne de la quantité de gaz transférée dans chaque extrémité aval (6, 16, 26) à partir des mesures du capteur (18) de température et du débitmètre (19), le contrôleur (17) étant configuré pour piloter l'organe (15) de contrôle du débit et/ou de la pression de chaque extrémité en fonction de cette température moyenne de la quantité de gaz transférée, notamment pour augmenter la vitesse de remplissage d'un réservoir raccordé à une extrémité aval lorsque la température moyenne de la quantité de gaz transféré diminue et pour augmenter la vitesse de remplissage d'un réservoir raccordé à une extrémité aval lorsque cette température moyenne de la quantité de gaz transférée augmente.

8. Dispositif selon l'une quelconque des revendications 5, 6 ou 7, **caractérisé en ce que** le contrôleur (17) est configuré pour piloter l'organe (15) de contrôle du débit et/ou de la pression en rétroaction.

9. Dispositif selon l'une quelconque des revendications 1 à 8, **caractérisé en ce que** le circuit (8) de transfert comprend, entre l'extrémité amont et les extrémités aval (6, 16, 26), une portion comprenant au moins deux conduites (28) distinctes parallèles, lesdites conduites parallèles (28) comprenant chacune un organe (9) respectif de régulation de la température du gaz, les conduites parallèles (28) comprenant chacune une première extrémité destinée à être raccordée à la source (2) et une seconde extrémité raccordée à chacune des extrémités aval (6, 16, 26) du circuit (8) via un ensemble de vannes (27) respectives.

10. Dispositif selon l'une quelconque des revendications 1 à 9, **caractérisé en ce qu'**il comprend une source (2) comportant un ou plusieurs stockages (4, 5, 12, 13) de gaz sous pression raccordés en série et/ou en parallèle à l'extrémité amont du circuit (8).

11. Dispositif selon l'une quelconque des revendications 1 à 10, **caractérisé en ce que** la source (2) comprend au moins deux ensembles de fluide à des températures différentes et **en ce que** l'organe (9) de régulation de la température du gaz comprend un mélangeur configuré pour assurer un mélange de fluide provenant des au moins deux ensembles pour atteindre une température déterminée.

12. Dispositif selon la revendication 10 ou 11, **caractérisé en ce que** la source (2) comporte plusieurs stockages (4, 5, 12, 13) de gaz sous pression raccordés en parallèle à l'extrémité amont du circuit (8) et **en ce que** aux moins deux desdits stockages sont destinés à alimenter respectivement des extrémités aval distinctes mais peuvent être mutualisés pour une même extrémité aval notamment les stockages peuvent être utilisés simultanément pour une même extrémité aval lorsque ces réservoirs se retrouvent à la même pression.

13. Dispositif selon l'une quelconque des revendications 1 à 12, **caractérisé en ce qu'**il comprend une source (2) comportant au moins un stockage (20) de gaz liquéfié, et **en ce que** l'organe (9) de régulation de la température du gaz comprend une portion du circuit (8) de transfert qui est dédoublée munie de deux branches parallèles dont l'une comprend un échangeur (11) de réchauffage du fluide, le dispositif (9) de régulation de température comprenant en outre un ensemble de vanne (s) (12, 13) configuré pour commander la répartition du fluide issu du stockage (20) de gaz liquéfié dans les deux branches parallèles afin de réguler la température du mélange de fluide en aval de l'organe de régulation de la température.

14. Dispositif selon la revendication 13, **caractérisé en ce que** l'ensemble de vanne(s) (12, 13) configuré pour commander la répartition du fluide issu du stockage (20) de gaz liquéfié dans les deux branches parallèles afin de réguler la température du mélange de fluide en aval de l'organe de régulation de la température assure également la régulation de rampe de pression du gaz transféré au réservoir à remplir, c'est-à-dire que les mêmes vannes réalisent à la fois la régulation de température et la régulation des vitesses de montée en pression respectives dans lesdits réservoirs.

15. Dispositif selon l'une quelconque des revendications 1 à 14, **caractérisé en ce que** l'organe (9) de régulation de la température du gaz comprend un échangeur (10) de chaleur assurant un échange de chaleur entre le gaz du circuit (8) et une source (21) froide tel qu'un fluide refroidissement.

16. Procédé de remplissage de plusieurs réservoirs (7) de gaz sous pression, en particulier des réservoirs d'hydrogène de véhicules, via un dispositif (1) comprenant un circuit (8) de transfert de fluide muni d'une extrémité amont raccordée à au moins une source (2) de gaz et au moins deux extrémités aval (6, 16, 26) parallèles destinées être raccordées à des réservoirs (7) distincts, le procédé comprenant une étape de refroidissement du gaz transféré de la source (2) vers les extrémités aval (6, 16, 26) dans un même organe (9) commun de régulation de la température, le procédé comprenant une étape de transfert de gaz dans des réservoirs distincts (7) raccordés à des extrémités aval (6, 16, 26) respectives, le débit et/ou la pression du gaz de gaz transféré dans les réservoirs (7) étant contrôlés de façon indépendante via des organes (9) de régulation respectifs distincts situés dans les extrémités aval (6, 16, 26) pour établir des vitesses de montée en pression respectives déterminées identiques ou distinctes dans lesdits réservoirs (7).

## Patentansprüche

1. Vorrichtung zum Füllen von Druckgastanks, insbesondere von Wasserstofftanks von Fahrzeugen, umfassend einen Fluidtransferkreis (8), der mit einem stromaufwärtigen Ende, das dazu bestimmt ist, an eine Gasquelle (2) angeschlossen zu werden, und mindestens zwei parallelen stromabwärtigen Enden (6, 16, 26), die dazu bestimmt sind, an verschiedene zu füllende Tanks (7) angeschlossen zu werden, versehen ist, wobei der Transferkreis (8) ein Element (9) zur Regelung der Temperatur des von der Quelle (2) zu den stromabwärtigen Enden transferierten Gases umfasst, wobei das Element (9) zur Regelung der Temperatur des Gases in dem Transferkreis (8) stromauf der mindestens zwei stromabwärtigen Enden (6, 16, 26) angeordnet ist, das heißt, dass das Element (9) zur Regelung der Temperatur des Gases den mindestens zwei stromabwärtigen Enden (6, 16, 26) gemeinsam ist, **dadurch gekennzeichnet, dass** die mindestens zwei stromabwärtigen Enden (6, 16, 26) des Kreises jeweils ein jeweiliges Element (15) zur Steuerung der Durchflussmenge und/oder des Drucks des transferierten Gases umfassen, das dazu ausgestaltet ist, die Durchflussmenge und/oder den Druck in jedem der stromabwärtigen Enden (6, 16, 26) unabhängig zu steuern, wobei das Element zur Steuerung der Durchflussmenge und/oder des Drucks jedes stromabwärtigen Endes (6, 16, 26) ein angesteuertes Ventil (15) zur Steuerung des Drucks und/oder der Durchflussmenge umfasst, wobei die Vorrichtung (1) zum Füllen eine elektronische Steuerung (17) umfasst, die dazu ausgestaltet ist, die Ventile (15) anzusteuern, wobei die Steuerung (17) dazu ausgestaltet ist, die Ventile (15) nach einem oder mehreren Schnellfüllalgorithmen anzusteuern, die jeweilige identische oder verschiedene Druckanstiegsgeschwindigkeiten in den Tanks (7) aufbauen.

2. Vorrichtung nach Anspruch 1, **dadurch gekennzeichnet, dass** sie, in jedem stromabwärtigen Ende (6, 16, 26), einen Temperatursensor (18) beinhaltet, der die Temperatur des Gases misst, wobei die Sensoren (18) mit der Steuerung (17) verbunden sind.

3. Vorrichtung nach einem der Ansprüche 1 bis 2, **dadurch gekennzeichnet, dass** die Temperatursensoren (18) stromab der jeweiligen Elemente (15) zur Steuerung der Durchflussmenge und/oder des Drucks angeordnet sind.

4. Vorrichtung nach einem der Ansprüche 2 oder 3, **dadurch gekennzeichnet, dass** die Steuerung (17) dazu ausgestaltet ist, das Element (15) zur Steuerung der Durchflussmenge und/oder des Drucks jedes stromabwärtigen Endes (6, 16, 26) in Abhängigkeit von der Temperatur anzusteuern, die von dem Temperatursensor (18) des stromabwärtigen Endes (6, 16, 26) gemessen wird.

5. Vorrichtung nach Anspruch 4, **dadurch gekennzeichnet, dass** die Steuerung (17) dazu ausgestaltet ist, die Füllgeschwindigkeit eines an ein stromabwärtiges Ende angeschlossenen Tanks zu steigern, wenn die von dem Sensor (18) zum Messen der Temperatur des Endes (6, 16, 26) gemessene Temperatur sinkt, und die Füllgeschwindigkeit eines an ein stromabwärtiges Ende angeschlossenen Tanks zu senken, wenn die von dem Temperatursensor (18) des Endes (6, 16, 26) gemessene Temperatur steigt.

6. Vorrichtung nach einem der Ansprüche 3 bis 5, **dadurch gekennzeichnet, dass** sie ein Durchflussmesser (19) zum Messen der Gasdurchflussmenge in jedem der stromabwärtigen Enden (6, 16, 26) beinhaltet, wobei die Durchflussmesser (19) mit der Steuerung (17) verbunden sind, wobei die Steuerung (17) dazu ausgestaltet ist, das Element (15) zur Steuerung der Durchflussmenge und/oder des Drucks jedes Endes in Abhängigkeit von der von dem Durchflussmesser (19) des stromabwärtigen Endes (6, 16, 26) gemessenen Durchflussmenge anzusteuern.

7. Vorrichtung nach Anspruch 6, **dadurch gekennzeichnet, dass** die Steuerung (17) dazu ausgestaltet ist, eine Durchschnittstemperatur der in jedes stromabwärtige Ende (6, 16, 26) transferierten Gasmenge anhand der Messungen des Temperatursensors (18) und des Durchflussmessers (19) zu berechnen, wobei die Steuerung (17) dazu ausgestaltet ist, das Element (15) zur Steuerung der Durchflussmenge und/oder des Drucks jedes Endes in Abhängigkeit von dieser Durchschnittstemperatur der transferierten Gasmenge anzusteuern, insbesondere, um die Füllgeschwindigkeit eines an ein stromabwärtiges Ende angeschlossenen Tanks zu steigern, wenn die Durchschnittstemperatur der Menge transferierten Gases sinkt, und um die Füllgeschwindigkeit eines an ein stromabwärtiges Ende angeschlossenen Tanks zu steigern, wenn diese Durchschnittstemperatur der transferierten Gasmenge steigt.

8. Vorrichtung nach einem der Ansprüche 5, 6 oder 7, **dadurch gekennzeichnet, dass** die Steuerung (17) dazu ausgestaltet ist, das Element (15) zur Steuerung der Durchflussmenge und/oder des Drucks rückgekoppelt anzusteuern.

9. Vorrichtung nach einem der Ansprüche 1 bis 8, **dadurch gekennzeichnet, dass** der Transferkreis (8), zwischen dem stromaufwärtigen Ende und den stromabwärtigen Enden (6, 16, 26), einen Abschnitt umfasst, der mindestens zwei verschiedene parallele Leitungen (28) umfasst, wobei die parallelen Leitungen (28) jeweils ein jeweiliges Element (9) zur Regelung der Temperatur des Gases umfassen, wobei die parallelen Leitungen (28) jeweils ein erstes Ende, das dazu bestimmt ist, an die Quelle (2) angeschlossen zu werden, und ein zweites Ende, das an jedes der stromabwärtigen Enden (6, 16, 26) des Kreises (8) über eine Anordnung von jeweiligen Ventilen (27) angeschlossen ist, umfassen.

10. Vorrichtung nach einem der Ansprüche 1 bis 9, **dadurch gekennzeichnet, dass** sie eine Quelle (2) umfasst, die einen oder mehrere Druckgasspeicher (4, 5, 12, 13) beinhaltet, die in Reihe und/oder parallel an das stromaufwärtige Ende des Kreises (8) angeschlossen sind.

11. Vorrichtung nach einem der Ansprüche 1 bis 10, **dadurch gekennzeichnet, dass** die Quelle (2) mindestens zwei Fluidanordnungen mit unterschiedlichen Temperaturen umfasst und dass das Element (9) zur Regelung der Temperatur des Gases einen Mischer umfasst, der dazu ausgestaltet ist, ein von den mindestens zwei Anordnungen kommendes Fluidgemisch zu gewährleisten, um eine bestimmte Temperatur zu erreichen.

12. Vorrichtung nach Anspruch 10 oder 11, **dadurch gekennzeichnet, dass** die Quelle (2) mehrere Druckgasspeicher (4, 5, 12, 13) beinhaltet, die parallel an das stromaufwärtige Ende des Kreises (8) angeschlossen sind, und dass mindestens zwei der Speicher dazu bestimmt sind, jeweils verschiedene stromabwärtige Enden zu versorgen, aber auch für ein selbes stromabwärtiges Ende gemeinsam genutzt werden können, die Speicher insbesondere gleichzeitig für ein selbes stromabwärtiges Ende verwendet werden können, wenn diese Tanks den gleichen Druck aufweisen.

13. Vorrichtung nach einem der Ansprüche 1 bis 12, **dadurch gekennzeichnet, dass** sie eine Quelle (2) umfasst, die mindestens einen Flüssiggasspeicher (20) beinhaltet, und dass das Element (9) zur Regelung der Temperatur des Gases einen Abschnitt der Transferleitung (8) umfasst, der gedoppelt und mit zwei parallelen Zweigen versehen ist, von denen der eine einen Tauscher (11) zum Wiedererwärmen des Fluids umfasst, wobei die Vorrichtung (9) zur Temperaturregelung ferner eine Ventilanordnung (12, 13) umfasst, die dazu ausgestaltet ist, die Verteilung des aus dem Flüssiggasspeicher (20) kommenden Fluids in die beiden parallelen Zweige zu lenken, um die Temperatur des Fluidgemisches stromab des Elements zur Regelung der Temperatur zu regeln.

14. Vorrichtung nach Anspruch 13, **dadurch gekennzeichnet, dass** die Ventilanordnung (12, 13), die dazu ausgestaltet ist, die Verteilung des aus dem Flüssiggasspeicher (20) kommenden Fluids in die beiden parallelen Zweige zu lenken, um die Temperatur des Fluidgemisches stromab des Elements zur Regelung der Temperatur zu regeln, auch die Druckrampenregelung des zu dem zu füllenden Tank transferierten Gases gewährleistet, das heißt, dass dieselben Ventile sowohl die Temperaturregelung als auch die Regelung der jeweiligen Druckanstiegsgeschwindigkeiten in den Tanks ausführen.

15. Vorrichtung nach einem der Ansprüche 1 bis 14, **dadurch gekennzeichnet, dass** das Element (9) zur Regelung der Temperatur des Gases einen Wärmetauscher (10) umfasst, der einen Wärmeaustausch zwischen dem Gas des Kreises (8) und einer kalten Quelle (21) wie einem Kühlfluid gewährleistet.

16. Verfahren zum Füllen von mehreren Druckgastanks (7), insbesondere der Wasserstofftanks von Fahrzeugen, über eine Vorrichtung (1), die einen Fluidtransferkreis (8) umfasst, der mit einem stromaufwärtigen Ende, das an mindestens eine Gasquelle (2) angeschlossen ist, und mindestens zwei parallele stromabwärtige Enden (6, 16, 26), die dazu bestimmt sind, an verschiedene Tanks (7) angeschlossen zu werden, versehen ist, wobei das Verfahren einen Schritt des Kühlens des von der Quelle (2) zu den stromabwärtigen Enden (6, 16, 26) transferierten Gases in einem selben gemeinsamen Element (9) zur Regelung der Temperatur umfasst, wobei das Verfahren einen Schritt des Transferierens von Gas in verschiedenen Tanks (7) umfasst, die an jeweilige stromabwärtige Enden (6, 16, 26) angeschlossen sind, wobei die Durchflussmenge und/oder der Druck des in die Tanks (7) transferierten Gases unabhängig über jeweilige Regelungselemente (9) gesteuert wird, die sich in den stromabwärtigen Enden (6, 16, 26) befinden, um jeweilige bestimmte, identische oder verschiedene Druckanstiegsgeschwindigkeiten in den Tanks (7) aufzubauen.

## Claims

1. Device for filling pressurized gas tanks, particularly vehicle hydrogen tanks, comprising a fluid transfer circuit (8) provided with an upstream end intended to be connected to a source (2) of gas and at least two parallel downstream ends (6, 16, 26) intended to be connected to distinct tanks (7) that are to be filled, the transfer circuit (8) comprising a temperature regulating member (9) for regulating the temperature of the gas transferred from the source (2) towards the downstream ends, the gas temperature regulating member (9) being positioned in the transfer circuit (8) upstream of the at least two downstream ends (6, 16, 26), i.e. the gas temperature regulating member (9) is common to the at least two downstream ends (6, 16, 26), **characterized in that** the at least two downstream ends (6, 16, 26) of the circuit each comprise a respective control member (15) for controlling the flow rate and/or the pressure of the transferred gas and configured to control the flow rate and/or the pressure in each of the downstream ends (6, 16, 26) independently, the flow rate and/or pressure control member of each downstream end (6, 16, 26) comprising a controlled valve (15) for controlling pressure and/or flow rate, the filling device (1) comprising an electronic controller (17) configured to control said valves (15), said controller (17) being configured to control said valves (15) using one or more rapid-filling algorithms establishing identical or different respective pressure increase rates in said tanks (7).

2. Device according to Claim 1, **characterized in that** it comprises, in each downstream end (6, 16, 26), a temperature sensor (18) that measures the temperature of the gas, said sensors (18) being connected to the controller (17).

3. Device according to either one of Claims 1 and 2, **characterized in that** the temperature sensors (18) are positioned downstream of the respective flow-rate and/or pressure control members (15).

4. Device according to either one of Claims 2 and 3, **characterized in that** the controller (17) is configured to control the flow-rate and/or pressure control member (15) for each downstream end (6, 16, 26) as a function of the temperature measured by the temperature sensor (18) for said downstream end (6, 16, 26).

5. Device according to Claim 4, **characterized in that** the controller (17) is configured to increase the filling rate of a tank connected to a downstream end when the temperature measured by the sensor (18) for measuring the temperature for said end (6, 16, 26) drops, and to decrease the filling rate of a tank connected to a downstream end when the temperature measured by the temperature sensor (18) for said end (6, 16, 26) rises.

6. Device according to any one of Claims 3 to 5, **characterized in that** it comprises a flowmeter (19) for measuring the flow rate of gas in each of the downstream ends (6, 16, 26), said flowmeters (19) being connected to the controller (17), the controller (17) being configured to control the flow-rate and/or pressure control member (15) for each end as a function of the flow rate measured by said flowmeter (19) for said downstream end (6, 16, 26).

7. Device according to Claim 6, **characterized in that** the controller (17) is configured to calculate a mean temperature of the quantity of gas transferred in each downstream end (6, 16, 26) on the basis of the measurements from the temperature sensor (18) and from the flowmeter (19), the controller (17) being configured to control the flow-rate and/or pressure control member (15) for each end as a function of this mean temperature of the quantity of gas transferred, notably so as to increase the rate of filling of a tank connected to a downstream end when the mean temperature of the quantity of gas transferred drops and to increase the rate of filling of a tank connected to a downstream end when this mean temperature of the quantity of gas transferred rises.

8. Device according to any one of Claims 5, 6 and 7, **characterized in that** the controller (17) is configured to control the flow-rate and/or pressure control member (15) using feedback control.

9. Device according to any one of Claims 1 to 8, **characterized in that** the transfer circuit (8) comprises, between the upstream end and the downstream ends (6, 16, 26), a portion comprising at least two parallel distinct pipes (28), said parallel pipes (28) each comprising a respective gas temperature regulating member (9), the parallel pipes (28) each comprising a first end intended to be connected to the source (2) and a second end connected to each of the downstream ends (6, 16, 26) of the circuit (8) via a set of respective valves (27).

10. Device according to any one of Claims 1 to 9, **characterized in that** it comprises a source (2) comprising one or more pressurized gas stores (4, 5, 12, 13) connected in series and/or in parallel to the upstream end of the circuit (8).

11. Device according to any one of Claims 1 to 10, **characterized in that** the source (2) comprises at least two sets of fluid at different temperatures, and **in that** the gas temperature regulating member (9) comprises a mixer configured to mix fluid from the at least two sets in order to achieve a determined temperature.

12. Device according to Claim 10 or 11, **characterized in that** the source (2) includes several pressurized gas stores (4, 5, 12, 13) connected in parallel to the upstream end of the circuit (8) and **in that** at least two of said stores are intended to supply respectively the different downstream ends but may be pooled for a single downstream end, the stores may notably be used simultaneously for a single downstream end when these tanks are at the same pressure.

13. Device according to any one of Claims 1 to 12, **characterized in that** it comprises a source (2) including at least one liquefied gas store (20), and **in that** the gas temperature regulating member (9) comprises a portion of the transfer circuit (8) that is duplicated, having two parallel branches one of which comprises an exchanger (11) for heating the fluid, the temperature regulating device (9) further comprising a set of valves (12, 13) configured to control the distribution of the fluid coming from the liquefied gas store (20) into the two parallel branches so as to regulate the temperature of the fluid mixture downstream of the temperature regulating member.

14. Device according to Claim 13, **characterized in that** the set of valves (12, 13) configured to control the distribution of the fluid coming from the liquefied gas store (20) into the two parallel branches to regulate the temperature of the fluid mixture downstream of the temperature regulation member also regulates the pressure ramp of the gas transferred to the tank to be filled, i.e. the same valves simultaneously regulate temperature and regulate respective pressure increase rates in said tanks.

15. Device according to any one of Claims 1 to 14, **characterized in that** the gas temperature regulating member (9) comprises a heat exchanger (10) performing an exchange of heat between the gas in the circuit (8) and a cold source (21) such as a cooling fluid.

16. Method for filling several pressurized gas tanks (7), particularly vehicle hydrogen tanks, via a device (1) comprising a fluid transfer circuit (8) having an upstream end connected to at least one gas source (2) and at least two parallel downstream ends (6, 16, 26) intended to be connected to distinct tanks (7), the method comprising a step of cooling the gas transferred from the source (2) towards the downstream ends (6, 16, 26) in one common temperature regulating member (9), the method comprising a step of transferring gas into distinct tanks (7) connected to respective downstream ends (6, 16, 26), the flow rate and/or the pressure of the gas transferred into the tanks (7) being controlled independently via distinct respective regulating members (9) located in the downstream ends (6, 16, 26) to establish identical or different determined respective rates of pressure increase in said tanks (7).
